# EUROPÄISCHE PATENTSCHRIFT

(11) **EP 3 628 525 B1**
(45) Veröffentlichungstag und Bekanntmachung des Hinweises auf die Patenterteilung: **23.02.2022**
(21) Anmeldenummer: 19199616.4
(22) Anmeldetag: 25.09.2019
(51) Int. Cl.: B60K 17/354, B60K 17/356

(54) **KRAFTFAHRZEUG MIT EINEM HILFSANTRIEB FÜR EINE LENKBARE ACHSE**
MOTOR VEHICLE COMPRISING AN AUXILIARY DRIVE FOR A STEERABLE AXLE
VÉHICULE AUTOMOBILE DOTÉ D'UN ENTRAÎNEMENT AUXILIAIRE POUR UN ESSIEU DIRIGEABLE

(30) Priorität: 28.09.2018 DE 102018124014
(43) Veröffentlichungstag der Anmeldung: 01.04.2020
(73) Patentinhaber: MAN Truck & Bus SE, 80995 München (DE)
(72) Erfinder: Beierer, Philipp, 85302 Gerolsbach (DE); Resch, Franz-Georg, 82299 Türkenfeld (DE); Peter, Michael, 83512 Wasserburg (DE)
(74) Vertreter: v. Bezold & Partner Patentanwälte - PartG mbB

(56) Entgegenhaltungen:
- EP-A2- 1 318 064
- WO-A1-2017/081164
- DE-A1-102011 118 111
- US-A1- 2018 065 479
- REUTER M ET AL: "DIE BREMSANLAGE DER NEUEN TRANSPORTER-GENERATION SPRINTER VON MERCEDES-BENZ", ATZ, SPRINGER VIEWEG, DE, Bd. 98, Nr. 1, 1. Januar 1996 (1996-01-01) , XP000548181, ISSN: 0001-2785

## Beschreibung

Die Erfindung betrifft ein Kraftfahrzeug mit einem Hilfsantrieb für eine lenkbare Achse.

Aus dem Stand der Technik sind Nutzfahrzeuge bekannt, die einen hydrostatischen Zusatzantrieb umfassen. Beispielsweise offenbart die Druckschrift EP 1 886 861 A2 ein Antriebssystem, umfassend eine herkömmliche, mechanische, über eine Antriebswelle angetriebene Hinterachse, wobei die Antriebswelle mit einem Achsdifferential der Hinterachse in Wirkverbindung steht. Das Antriebssystem umfasst ferner zwei mittels hydraulischer Radmotoren RM antreibbare Vorderräder 1, die lenkbar an einer Vorderachse 3 angeordnet sind. Die zwei Radmotoren RM sind in einen geschlossenen hydrostatischen Kreislauf integriert. Dabei wird eine Hauptpumpe mechanisch über den mechanischen Triebstrang des Fahrzeugs angetrieben. Durch ein Steuerventil können die zwei Radmotoren RM zugeschaltet werden. Damit können gegenüber Fahrzeugen mit permanentem Allradantrieb erhebliche Gewichts- und Effizienzvorteile realisiert werden, insbesondere in Fahrzeugen, bei denen der Allradantrieb nur für einen kleinen Teil der tatsächlichen Fahrstrecke benötigt wird.

Aufgrund der hohen Nutzlast sind Baumaschinen, Flurförderfahrzeuge und LKWs in der Regel durch eine starre Achse gekennzeichnet. Leichte Fahrzeuge, insbesondere auch Nutzfahrzeuge mit geringer Nutzlast, zeichnen sich insbesondere bei der Lenkachse durch eine Einzelradaufhängung aus. Entgegen einem durchgängigen Achskörper einer Starrachse, der über Feder-, Dämpfungs- und Führungselemente mit dem Rahmen/Körper des Fahrzeugs verbunden wird, kommen bei der Einzelradaufhängung deutlich leichtere und filigranere Komponenten zum Einsatz. Derartig leichte Fahrzeuge mit Einzelradaufhängung haben in der Regel zwei, in Ausnahmen auch drei Achsen.

Der Antrieb dieser Fahrzeuge sieht vor, dass zumindest eine Achse von einem mechanischen Antriebsstrang angetrieben wird. Dies kann entweder die Vorderachse oder die Hinterachse sein. Aus der Praxis sind auch derartige Fahrzeuge mit Allradantrieb bekannt. Hierbei wird permanent oder optional die Antriebskraft auf alle Achsen übertragen. Aus der Praxis ist bekannt, dass die Verteilung der Antriebskraft hierbei mechanisch über Verteilergetriebe und/oder Kupplungen sowie Wellen erfolgt. Nachteilig hieran ist, dass hierfür eine zugewiesene Antriebswelle längs der Fahrzeugachse benötigt wird. Daraus ergeben sich auch Einschränkungen bezüglich des Fahrniveaus.

Die aus dem Stand der Technik bekannten hydrostatisch angetriebenen Radmotoren sind für Fahrzeuge mit Einzelradaufhängung in der Regel unvorteilhaft. Aus fahrdynamischen Gründen ist es wünschenswert, eine möglichst geringe ungefederte Masse des Rades zu haben, was durch die vergleichsweise schweren hydraulischen Radmotoren beeinträchtigt wäre. Ferner ist die Verlegung hydraulischer Leitungen zwischen Radteil und Fahrzeugkörper mit Nachteilen verbunden, da im Allgemeinen nur sehr wenig Bauraum zur Verfügung steht.

Dokument WO 2017/081164 A1 offenbart ein Eingriffsverfahren einer hydraulischen Unterstützung eines Fahrzeugs, wenn die folgenden Bedingungen erfüllt sind. Der Beschleunigungssollwert überschreitet einen vorbestimmten Schwellenwert, während die Drehzahl des mechanischen Rads unter einem vorbestimmten Schwellenwert liegt. Der Beschleunigungssollwert liegt unter einem vorbestimmten Schwellenwert oder die Änderung des Beschleunigungssollwerts ist negativ und unter einem vorbestimmten negativen Schwellenwert, während die Differenz zwischen der Drehzahl des mechanischen Rads und der des Tragrads über einem vorbestimmten Schwellenwert liegt. Der Bremssollwert liegt über einem vorgegebenen Schwellenwert.

Es ist somit eine Aufgabe der Erfindung, ein verbessertes Fahrzeug bereitzustellen, mit dem Nachteile herkömmlicher Technik vermieden werden können. Die Aufgabe der Erfindung ist es, insbesondere auch für Fahrzeuge mit einer lenkbaren Achse und Einzelradaufhängung eine Antriebsmöglichkeit bereitzustellen, die ein gutes Fahrverhalten ermöglicht und wenig Bauraum beansprucht.

Diese Aufgaben werden durch ein Kraftfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß betrifft die Erfindung ein Nutzfahrzeug mit einer antreibbaren starren ersten Achse, die über einen mechanischen Antriebsstrang, der einen Verbrennungsmotor aufweist, antreibbar ist und/oder angetrieben wird. Das Kraftfahrzeug umfasst ferner eine lenkbare zweite Achse mit Einzelradaufhängung. Die Räder der zweiten Achse sind somit nicht an einer Starrachse angeordnet, sondern können voneinander unabhängig Federbewegungen ausführen. Vorzugsweise ist die erste Achse eine Hinterachse und die zweite Achse eine Vorderachse des Fahrzeugs. Das Nutzfahrzeug hat nur eine starre Achse, d. h., die starre erste Achse ist die einzige starre Achse des Nutzfahrzeugs. Es handelt sich somit um ein leichtes Nutzfahrzeug und nicht um ein schwere Nutzfahrzeug, das in der Regel zwei oder mehr starre Achsen aufweisen. Gemäß allgemeinen Gesichtspunkten der Erfindung ist die zweite Achse von einem hydrostatischen Hilfsantrieb antreibbar und/oder angetrieben, der einen Antriebsmotor in Form eines Hydraulikmotors, auch als Hydromotor bezeichnet, aufweist, der seine Antriebsleistung über ein chassisfestes Getriebe auf die Räder der zweiten Achse aufteilt. Das Getriebe kann also ein nicht-federndes, am Fahrzeugrahmen befestigtes Getriebe sein. Das Getriebe kann als Achsdifferential, weiter vorzugsweise als Kegelrad-Differentialgetriebe ausgeführt sein. Der Antriebsmotor ist somit insbesondere kein Radmotor bzw. Radnabenmotor, sondern ein Antriebsmotor, der z. B. chassisfest angeordnet werden kann. Die lenkbare zweite Achse mit Einzelradaufhängung wird somit nicht durch den Verbrennungsmotor angetrieben, sondern von dem Hilfsantrieb mit dem Antriebsmotor, der mit dem Getriebe wirkverbunden ist. Die Antriebsleistung des hydrostatischen Antriebs wird von einem Nebenabtrieb (engl. power take-off ( PTO )) des mechanischen Antriebsstrangs bereitgestellt, also entweder über einen am Verbrennungsmotor vorgesehenen Nebenabtrieb oder über einen am Fahrzeuggetriebe des mechanischen Antriebsstrangs, welches die Motordrehzahl auf die Antriebsdrehzahl übersetzt, vorgesehenen Nebenabtrieb.

Die erfindungsgemäße Kombination einer mechanisch angetriebenen Starrachse mit einer hydrostatisch angetriebenen Achse mit Einzelradaufhängung bietet insbesondere für leichte Nutzfahrzeuge den Vorzug, dass bei Bedarf ein hohes Drehmoment an eine zusätzliche, hier die Achse mit Einzelradaufhängung, übertragen werden kann, ohne dass dafür eine zugewiesene Antriebswelle längs der Fahrzeuglängsachse benötigt wird. Entsprechend entstehen auch keine Einschränkungen bezüglich des Fahrniveaus durch solch eine sich in Längsrichtung des Fahrzeugs erstreckende Antriebswelle. Ferner kann die Masse des Rades gering gehalten werden, da kein Radnabenmotor vonnöten ist, wodurch fahrdynamisch annähernd die gleichen Randbedingungen vorherrschen wie ohne den Hilfsantrieb.

Gemäß einer bevorzugten Ausführungsform kann der Antriebsmotor koaxial zu einem Abtrieb des Achsdifferentials, insbesondere zu einer getriebenen Welle des Achsdifferentials, angeordnet sein. Dies bedeutet, dass eine Rotationsachse einer Antriebswelle des Antriebsmotors oder eines anderen rotierenden Teils des Antriebsmotors zur Übertragung der Antriebsleistung der Rotationsachse einer getriebenen Welle des Abtriebs des Achsdifferentials entspricht.

Gemäß einer bevorzugten Variante dieser Ausführungsform ist ein koaxial zu einem Abtrieb des Achsdifferentials rotierbares Teil des Antriebsmotors mit einem Käfig des Achsdifferentials der zweiten Achse wirkverbunden, insbesondere drehfest verbunden. Der Antriebsmotor kann hierbei somit den Käfig des Achsdifferentials unmittelbar antreiben. Auf ein Tellerrad und auf ein mit dem Tellerrad bewegungsgekoppeltes Antriebskegelrad zum Antrieb des Käfigs des Achsdifferentials kann vorteilhafterweise verzichtet werden. Der Antriebsmotor kann hierbei auf der Welle des Achsdifferentials sitzen. Ein weiterer Vorteil dieser Ausgestaltungsform ist der geringe beanspruchte Bauraum, da oberhalb und unterhalb der zweiten Achse kein oder nur wenig Bauraum zur Anordnung für den Antriebsmotor benötigt wird.

Bei einer weiteren bevorzugten Ausführungsform ist das Getriebe wiederum als Achsdifferential ausgeführt, wobei der Antriebsmotor nun nicht koaxial zu einem Abtrieb oder nicht koaxial zu einer getriebenen Welle des Achsdifferentials angeordnet ist. Vielmehr ist eine zu der Rotationsachse des Abtriebs der Achsdifferentials räumlich versetzt angeordnete Antriebswelle des Antriebsmotors mit dem Achsdifferential der zweiten Achse wirkverbunden. Der Antriebsmotor kann hierbei über ein mechanisches Getriebe räumlich unabhängig zur Drehrichtung des Achsdifferentials, beispielsweise durch einen Winkeltrieb oder achsparallel, angeordnet sein.

Diese Ausgestaltungsform bietet den Vorteil, dass keine oder zumindest nur geringe Modifikationen am inneren Aufbau eines an sich üblichen Achsdifferentials der zweiten Achse vonnöten sind, um dieses anstatt von einer Antriebswelle, die vom mechanischen Antriebsstrang angetrieben wird, nun durch den Antriebsmotor des Hilfsantriebs elektrisch oder hydrostatisch anzutreiben.

Gemäß einer vorteilhaften Variante dieser Ausführungsform ist das Getriebe ein Kegelrad-Differentialgetriebe, aufweisend ein Tellerrad, ein Paar Achskegelräder und ein Paar Ausgleichskegelräder, wobei ein auf einer Antriebswelle des Antriebsmotors sitzendes Antriebsrad mit dem Tellerrad in Eingriff steht.

Beispielsweise kann der hydrostatische Hilfsantrieb eine vom mechanischen Antriebsstrang angetriebene Hydraulikpumpe aufweisen, die über eine hydraulische Arbeitsleitung mit dem Hydraulikmotor verbunden ist. Die Hydraulikpumpe wird über einen Nebenabtrieb des mechanischen Antriebsstrangs angetrieben, also entweder über einen am Verbrennungsmotor vorgesehenen Nebenabtrieb oder über einen am Fahrzeuggetriebe des mechanischen Antriebsstrangs vorgesehenen Nebenabtrieb. Die Antriebsleistung für den hydrostatischen Antrieb wird somit nicht mechanisch an die Achse mit Einzelradaufhängung übertragen.

Der Hydraulikmotor kann als Hydraulikmotor mit konstantem oder variablem Schluckvolumen ausgeführt sein. Entsprechend kann die Hydraulikpumpe als Hydraulikpumpe mit konstantem oder variablem Schluckvolumen ausgeführt sein. Die Hydraulikpumpe kann beispielsweise direkt oder über eine Kupplung am Verbrennungsmotor oder am Getriebe angeflanscht sein. Die hydraulischen Arbeitsleitungen zur Energieübertragung zwischen Hydraulikpumpe und Hydraulikmotor können als starre und/oder flexible Leitungen ausgeführt sein.

Die Antriebskomponenten des hydrostatischen Antriebs lassen sich bedarfsgerecht mit geringem Bauraumbedarf unterbringen, d. h., in Bezug auf den erforderlichen Bauraum reduziert sich der benötigte Installationsraum verglichen mit einem mechanischen Allradantrieb erheblich. Mit einem hydrostatischen Zusatzantrieb können ferner hohe Antriebsdrehmomente bei vergleichsweise geringem Gewicht für die von dem hydrostatischen Zusatzantrieb benötigten Komponenten erzielt werden.

Gemäß einem weiteren Aspekt kann der Hydraulikmotor mittels einer Kupplung oder eines Freilaufs von dem Achsdifferential der zweiten Achse und/oder von den Radantriebswellen der zweiten Achse an- und abkoppelbar sein. Dadurch kann eine einfache Zuschaltmöglichkeit für den hydrostatischen Hilfsantrieb realisiert werden. Ferner ist ein Übersetzungsgetriebe mit einer vorbestimmten Untersetzung oder Übersetzung, über das der Hydraulikmotor in Wirkverbindung mit den Rädern der zweiten Achse steht, vorgesehen sein zur Anpassung des Betriebsbereichs des Hydraulikmotors an die Raddrehzahl. Wie vorstehend bereits allgemein für den Antriebsmotor des Hilfsantriebs erläutert, kann der Hydraulikmotor entweder koaxial auf der Welle des Achsdifferentials oder über ein mechanisches Getriebe räumlich unabhängig zur Drehrichtung des Achsdifferentials angeordnet sein.

Bei der ersten Variante kann beispielsweise in dem Käfig des Achsdifferentials ein Ausgleichsräder tragender Achsbolzen gelagert sein, wobei diese Ausgleichsräder mit auf Radantriebswellen angeordneten Achswellenrädern kämmen und diese Räder als Kegelräder ausgebildet sind. Ferner kann der Hydraulikmotor hierbei ein Radialkolbenmotor sein, aufweisend einen äußeren feststehenden Kurvenring und ein inneres, umlaufendes Zylindergehäuse, das drehfest mit dem Käfig verbunden ist, um diesen zu rotieren und darüber die zweite Achse anzutreiben.

Die zweite Achse kann zwei angeordnete Radantriebswellen aufweisen, die jeweils radseitig mit einem Rad drehfest verbunden sind und an ihrem anderen Ende mit dem Achsdifferential oder dem Hydraulikmotor wirkverbunden sind. Der Antriebsmotor kann beispielsweise in einem mittleren Bereich der zweiten Achse angeordnet sein.

Bei dem Nutzfahrzeug kann es sich insbesondere um ein Nutzfahrzeug mit einer zulässigen Höchstgeschwindigkeit von über 60 km/h und/oder um ein Nutzfahrzeug, das eine auf mindestens zwei Räder des Nutzfahrzeugs einwirkende Radbremseinrichtung aufweist, handeln. Weitere Einzelheiten und Vorteile der Erfindung werden im Folgenden unter Bezug auf die beigefügten Zeichnungen beschrieben. Es zeigen:
- Figur 1: ein schematisches Blockschaltbild eines Fahrzeugantriebs gemäß einer Ausführungsform der Erfindung;
- Figur 2: eine lenkbare Vorderachse mit Einzelradaufhängung, angetrieben durch einen Hydromotor gemäß einer Ausführungsform der Erfindung; und
- Figur 3: eine lenkbare Vorderachse mit Einzelradaufhängung, angetrieben durch einen Hydromotor gemäß einer weiteren Ausführungsform der Erfindung.

Gleiche oder funktional äquivalente Elemente sind in allen Figuren mit denselben Bezugszeichen bezeichnet.

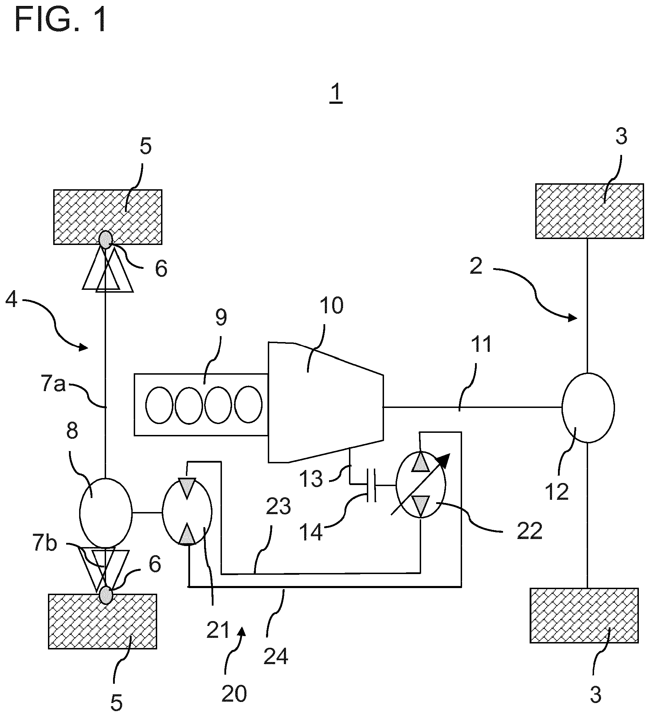

Figur 1 illustriert einen Antrieb 1 für ein Nutzfahrzeug mit zwei angetriebenen Achsen 2, 4. Das Kraftfahrzeug ist vorliegend als Nutzfahrzeug ausgeführt. Das Fahrzeug umfasst einen herkömmlichen mechanischen Antriebsstrang zum Antrieb einer starren Hinterachse 2 des Kraftfahrzeugs. Der mechanische Antriebsstrang umfasst einen Verbrennungsmotor 9, ein Getriebe 10 und eine Antriebswelle 11, die sich in Richtung der Fahrzeuglängsachse erstreckt und die Antriebsleistung an die Hinterachse 2 überträgt. Die Antriebswelle 11 ist mit einem Achsdifferential 12 der Hinterachse 2 verbunden, über das die Antriebsleistung auf die beiden Hinterräder 3 im Wesentlichen zu gleichen Teilen aufgeteilt wird.

Das Fahrzeug umfasst ferner eine lenkbare Vorderachse 4. Die Räder 5 der Vorderachse 4 sind in an sich bekannter Weise mit einer Einzelradaufhängung 6 am Fahrwerk befestigt Die Vorderachse 4 weist somit keine Starrachse auf, d. h., die Vorderachse 4 weist keinen durchgängigen Achskörper, der über Feder-, Dämpfungs- und Führungselemente mit dem Rahmen/Körper des Fahrzeugs verbunden ist, auf.

Die Vorderachse 4 ist durch einen Hydraulikmotor 21 (auch als Hydromotor bezeichnet) eines hydrostatischen Hilfsantriebs 20 antreibbar. Hierbei ist der Hydraulikmotor 21 mit einem Achsdifferential 8 der Vorderachse 4 wirkverbunden. Die beiden Abtriebe des Achsdifferentials in Form der beiden Abtriebswellen 8e sind jeweils mit einer der Radantriebswellen 7a, 7b drehfest verbunden. Die Rotationsachse R der Abtriebe bzw. Abtriebswellen 8e ist durch die gestrichelte Linie R dargestellt.

Der Hydraulikmotor 21 ist in einen an sich bekannten geschlossenen hydrostatischen Kreislauf integriert, wobei eine Hydropumpe 22 mechanisch über den mechanischen Antriebsstrang des Fahrzeugs angetrieben wird und über Fluidleitungen 23, 24 hydraulisch mit dem Hydraulikmotor 21 zur Energieübertragung verbunden ist. Eine der Fluidleitungen 23, 24 bildet dabei einen ersten Ast zur Ausbildung eines Vorlaufs, während die andere Fluidleitung den zweiten Ast bildet und damit den Rücklauf des Hydraulikkreislaufs. Der Hydraulikmotor und die Hydraulikpumpe 22 können mit konstantem oder variablem Schluckvolumen ausgeführt sein. Die Hydraulikpumpe kann über eine Kupplung 14 und eine Nebenabtriebswelle 13 an einem Nebenabtrieb des Verbrennungsmotors 9 oder, wie in Figur 1 dargestellt, an einem Nebenabtrieb am Fahrzeuggetriebe 10 angeflanscht sein. Ferner kann eine Speisepumpe (nicht gezeigt) vorgesehen sein, um auftretende interne und externe Lekagemengen zu kompensieren. Unter externen Lekagemengen versteht man im Allgemeinen Mengen, die mit dem bloßen Auge nicht erkennbar sind. Die Speisepumpe ist in diesem Fall über eine Hydraulikleitung mit einem Vorrat (Speicher) an Hydraulikflüssigkeit (nicht gezeigt) verbunden. Der Hydraulikmotor 21 und die Hydraulikpumpe 22 können jeweils als hydrostatische Radialkolbenmaschinen ausgebildet sein.

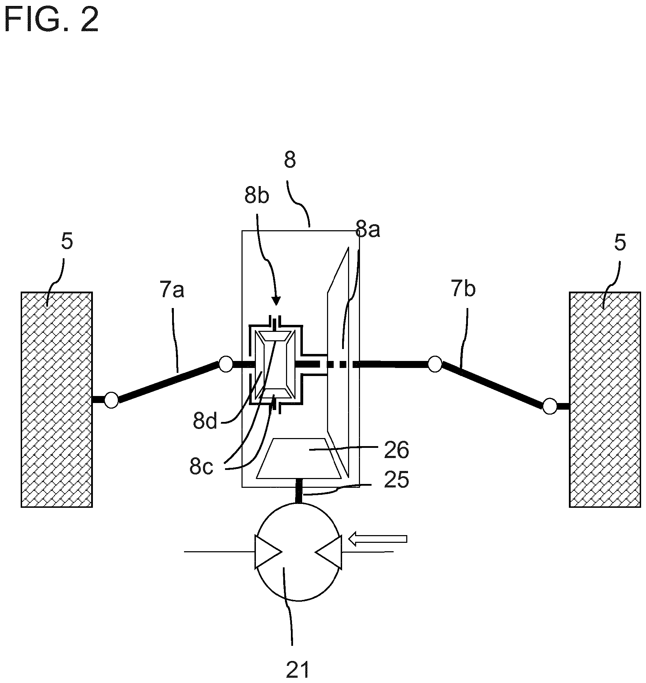

Figur 2 zeigt ein Beispiel, wie der Hydraulikmotor 21 mit dem Achsdifferential 8 der Vorderachse 4 wirkverbunden sein kann. Der Hydraulikmotor 21 ist chassisfest angeordnet. Gemäß der in Figur 2 gezeigten Ausführungsvariante weist eine vom Hydraulikmotor 21 angetriebene Antriebswelle 25 an ihrem distalem Ende ein Antriebskegelrad 26 auf, das mit dem Tellerrad 8a des Achsdifferentials 8 der Vorderachse 4 kämmt. Der Hydromotor 21 ist in einen an sich bekannten hydrostatischen Kreislauf 20 integriert, zum Beispiel analog zu dem in Figur 1 gezeigten Beispiel, wobei eine Hydraulikpumpe 22 mechanisch über den die Brennkraftmaschine 9 enthaltenen mechanischen Antriebsstrang des Fahrzeugs angetrieben wird und über Fluidleitungen hydraulisch mit dem Hydraulikmotor 21 verbunden ist.

Das Tellerrad 8a ist in an sich bekannter Weise drehfest mit dem Käfig 8b des Achsdifferentials 8 verbunden. Das Achsdifferential ist als Kegelrad-Differentialgetriebe ausgeführt, wobei ein Paar Achskegelräder 8d und ein Paar Ausgleichskegelräder 8c miteinander in Eingriff stehen. Die Achskegelräder 8d treiben über die getriebenen Wellen 8e des Achsdifferentials 8 die Radantriebswellen 7a und 7b an und übertragen so die Antriebsleistung des Hydraulikmotors 21 an die Vorderräder 5.

Gemäß der in Figur 2 gezeigten Ausführungsvariante ist der Hydraulikmotor 21 somit nicht koaxial zur Rotationsachse R der Abtriebe 8e des Achsdifferentials 8 angeordnet, sondern räumlich versetzt zu der Rotationsachse R angeordnet.

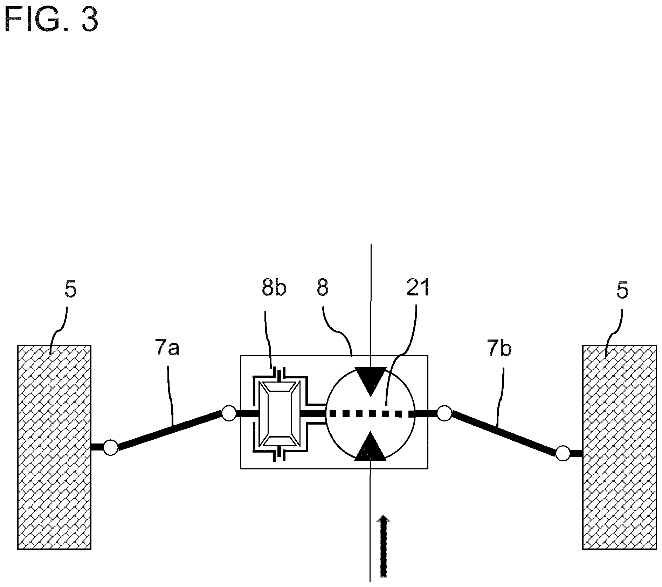

Figur 3 zeigt eine alternative Ausführungsform. Eine Besonderheit der in Figur 3 gezeigten Ausführungsform liegt darin, dass der Hydraulikmotor 21 hier nicht axial versetzt zum Achsdifferential 8 bzw. zu der Rotationsachse R der Abtriebe 8e des Achsdifferentials 8 angeordnet ist. Der Hydraulikmotor 21 ist vielmehr koaxial zur Rotationsachse R angeordnet und treibt den Käfig 8b des Achsdifferentials 8 direkt an und ersetzt somit das Tellerrad 8a. Der Hydraulikmotor 21 ist als Radialkolbenmotor ausgeführt, aufweisend einen äußeren, feststehenden Kurvenring und ein inneres, umlaufendes Zylindergehäuse, das drehfest mit dem Käfig 8b verbunden ist und diesen somit in eine Rotationsbewegung versetzen kann. In dem Käfig 8b ist wiederum ein Ausgleichsräder tragender Achsbolzen gelagert, wobei diese Ausgleichsräder 8c mit auf den Radantriebswellen 7a, 7b angeordneten Achswellenrädern 8d kämmen, die jeweils als Kegelräder ausgebildet sind.

Der Hydromotor 21 kann gemäß den gezeigten Ausführungsvarianten wahlweise mit oder ohne ein Übersetzungsgetriebe, das eine definierte Untersetzung oder Übersetzung aufweist, seine Antriebsleistung auf die Räder 5 der zweiten Achse 4 übertragen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung (durch den Gegenstand der beigefügten Ansprüche definiert) zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Antrieb
- 2: Erste Achse, insbesondere Hinterachse
- 3: Hinterräder
- 4: Lenkbare zweite Achse mit Einzelradaufhängung, insbesondere Vorderachse
- 5: Vorderräder
- 6: Einzelradaufhängung
- 7a, 7b: Radantriebsachsen
- 8: Achsendifferential
- 8a: Tellerrad
- 8b: Käfig
- 8c: Ausgleichskegelrad
- 8d: Achskegelrad
- 8e: Abtrieb des Achsdifferentials, z. B. getriebene Welle
- 9: Verbrennungsmotor
- 10: Getriebe
- 11: Antriebswelle
- 12: Achsdifferential
- 13: Abtrieb
- 14: Kupplung
- 20: Hydrostatischer Kreislauf
- 21: Hydraulikmotor
- 22: Hydraulikpumpe
- 23: Hydraulikleitung
- 24: Hydraulikleitung
- 25: Antriebswelle des Hydraulikmotors
- 26: Antriebskegelrad
- R: Rotationsachse der Abtriebe des Achsdifferentials

## Patentansprüche

1. Kraftfahrzeug, nämlich ein Nutzfahrzeug, mit einer antreibbaren starren ersten Achse (2), die über einen mechanischen, einen Verbrennungsmotor (9) aufweisenden Antriebsstrang (9, 10, 11, 12) antreibbar und/oder angetrieben ist, und einer lenkbaren zweiten Achse (4) mit Einzelradaufhängung, wobei die zweite Achse (4) von einem hydrostatischen Hilfsantrieb (20) antreibbar und/oder angetrieben ist, dessen Antriebsleistung über einen am Verbrennungsmotor vorgesehenen Nebenabtrieb oder einen am Fahrzeuggetriebe des mechanischen Antriebsstrangs, welches die Motordrehzahl auf die Antriebsdrehzahl übersetzt, vorgesehenen Nebenabtrieb bereitgestellt wird, wobei der Hilfsantrieb einen Hydraulikmotor (21) aufweist, der seine Antriebsleistung über ein chassisfestes Getriebe auf die Räder (5) der zweiten Achse (4) aufteilt, wobei die starre erste Achse die einzige starre Achse des Nutzfahrzeugs ist, **gekennzeichnet durch** ein Übersetzungsgetriebe mit einer vorbestimmten Untersetzung oder Übersetzung, über das der Hydraulikmotor (21) in Wirkverbindung mit den Rädern (5) der zweiten Achse (4) steht.

2. Kraftfahrzeug nach Anspruch 1, wobei das Getriebe ein Achsdifferential (8) ist und den Hydraulikmotor (21) koaxial zu einem Abtrieb (8e) des Achsdifferentials (8) angeordnet ist.

3. Kraftfahrzeug nach Anspruch 2, wobei ein koaxial zum Abtrieb (8e) des Achsdifferentials (8) rotierbares Teil des Hydraulikmotors (21) mit einem Käfig (8b) des Achsdifferentials (8) der zweiten Achse (4) wirkverbunden ist.

4. Kraftfahrzeug nach Anspruch 1, wobei das Getriebe ein Achsdifferential (8) ist und wobei der Hydraulikmotor (21) nicht koaxial zu einem Abtrieb (8e) des Achsdifferentials (8) angeordnet ist und eine Antriebswelle (25) des Hydraulikmotors (21) mit dem Achsdifferential (8) der zweiten Achse (4) wirkverbunden ist.

5. Kraftfahrzeug nach Anspruch 1 oder 4, wobei das Getriebe ein Kegelraddifferentialgetriebe (8) ist, aufweisend ein Tellerrad (8a), ein Paar Achskegelräder (8d) und ein Paar Ausgleichskegelräder (8c), wobei ein auf einer Antriebswelle (17) des Hydraulikmotors (21) sitzendes Antriebsrad (26) mit dem Tellerrad (8a) in Eingriff steht.

6. Kraftfahrzeug nach einem der vorhergehenden Ansprüche, wobei der hydrostatische Hilfsantrieb (20) eine vom mechanischen Antriebsstrang (9, 10, 11, 12) über den Nebenabtrieb des Verbrennungsmotors oder des Fahrzeuggetriebes angetriebene Hydraulikpumpe (22) aufweist, die über hydraulische Arbeitsleitungen (23, 24) mit dem Hydraulikmotor (21) verbunden ist.

7. Kraftfahrzeug nach Anspruch 4 oder 5, wobei der Hydraulikmotor (21) mittels einer Kupplung oder eines Freilaufs von dem Achsdifferential (8) der zweiten Achse (4) und/oder den Radantriebswellen (7a, 7b) der zweiten Achse (4) an- und abkoppelbar ist.

8. Kraftfahrzeug nach Anspruch 3, wobei in dem Käfig (8b) des Achsdifferentials (8) ein Ausgleichsräder tragender Achsbolzen gelagert ist, wobei diese Ausgleichsräder mit auf Radantriebswellen angeordneten Achswellenrädern kämmen und diese Räder als Kegelräder ausgebildet sind; und wobei der Hydraulikmotor (21) ein Radialkolbenmotor ist, aufweisend einen äußeren, feststehenden Kurvenring und ein inneres, umlaufendes Zylindergehäuse, das drehfest mit dem Käfig (8b) verbunden ist.

9. Kraftfahrzeug nach einem der vorhergehenden Ansprüche, wobei das Kraftfahrzeug ein leichtes Nutzfahrzeug ist.

## Claims

1. A motor vehicle, namely a utility vehicle, with a drivable rigid first axle (2) which is drivable and/or driven via a mechanical drive train (9, 10, 11, 12) which comprises an internal combustion engine (9), and with a steerable second axle (4) with independent wheel suspension, the second axle (4) being drivable and/or driven by a hydrostatic auxiliary drive (20), the drive power of which is provided via a power take-off, provided on the internal combustion engine, or a power take-off, provided on the vehicle transmission of the mechanical drive train, which vehicle transmission steps the engine speed to the drive rotational speed, the auxiliary drive comprising a hydraulic motor (21) which divides its drive power via a transmission which is fixed to the chassis to the wheels (5) of the second axle (4), the rigid first axle being the only rigid axle of the utility vehicle, **characterized by** a transmission with a predefined step-down gear ratio or step-up gear ratio, via which transmission the hydraulic motor (21) is operatively connected to the wheels (5) of the second axle (4).

2. The motor vehicle according to Claim 1, the transmission being an axle differential (8), and the hydraulic motor (21) being arranged coaxially with respect to an output (8e) of the axle differential (8).

3. The motor vehicle according to Claim 2, a part of the hydraulic motor (21) which is rotatable coaxially with respect to the output (8e) of the axle differential (8) being operatively connected to a cage (8b) of the axle differential (8) of the second axle (4).

4. The motor vehicle according to Claim 1, the transmission being an axle differential (8), and the hydraulic motor (21) not being arranged coaxially with respect to an output (8e) of the axle differential (8), and a drive shaft (25) of the hydraulic motor (21) being operatively connected to the axle differential (8) of the second axle (4).

5. The motor vehicle according to Claim 1 or 4, the transmission being a bevel gear differential transmission (8), comprising a ring gear (8a), a pair of axle bevel gears (8d) and a pair of differential bevel gears (8c), a drive gear (26) which is seated on a drive shaft (17) of the hydraulic motor (21) being in engagement with the ring gear (8a).

6. The motor vehicle according to one of the preceding claims, the hydrostatic auxiliary drive (20) comprising a hydraulic pump (22) which is driven by the mechanical drive train (9, 10, 11, 12) via the power take-off of the internal combustion engine or of the vehicle transmission and which is connected via a hydraulic working lines (23, 24) to the hydraulic motor (21).

7. The motor vehicle according to Claim 4 or 5, it being possible for the hydraulic motor (21) to be coupled to and decoupled from the axle differential (8) of the second axle (4) and/or the wheel driveshafts (7a, 7b) of the second axle (8) by means of a clutch or a freewheel.

8. The motor vehicle according to Claim 3, an axle pin which supports differential gears being mounted in the cage (8b) of the axle differential (8), the said differential gears meshing with axle shaft gears which are arranged on wheel drive shafts, and said gears being configured as bevel gears; and the hydraulic motor (21) being a radial piston motor, comprising an outer, stationary cam ring and an inner, circulating cylinder housing which is connected fixedly to the cage (8b) for conjoint rotation.

9. The motor vehicle according to one of the preceding claims, the motor vehicle being a light-duty utility vehicle.

## Revendications

1. Véhicule automobile, à savoir véhicule utilitaire, comprenant un premier essieu rigide entraînable (2), qui peut être entraîné et/ou est entraîné par l'intermédiaire d'une chaîne cinématique mécanique (9, 10, 11, 12) présentant un moteur à combustion interne (9), et un deuxième essieu (4) dirigeable comprenant une suspension de roue individuelle, le deuxième essieu (4) pouvant être entraîné et/ou étant entraîné par un entraînement auxiliaire hydrostatique (20), dont la puissance d'entraînement est fournie par l'intermédiaire d'une prise de force prévue sur le moteur à combustion interne ou d'une prise de force prévue sur la transmission de véhicule de la chaîne cinématique mécanique, qui convertit la vitesse de rotation du moteur en vitesse de rotation d'entraînement, l'entraînement auxiliaire présentant un moteur hydraulique (21), qui répartit sa puissance d'entraînement entre les roues (5) du deuxième essieu (4) par l'intermédiaire d'une transmission solidaire du châssis, le premier essieu rigide étant le seul essieu rigide du véhicule utilitaire, **caractérisé par** une transmission à démultiplication avec une réduction ou une démultiplication prédéterminée, par laquelle le moteur hydraulique (21) est en liaison fonctionnelle avec les roues (5) du deuxième essieu (4).

2. Véhicule automobile selon la revendication 1, dans lequel la transmission est un différentiel d'essieu (8) et le moteur hydraulique (21) est agencé coaxialement à une sortie (8e) du différentiel d'essieu (8).

3. Véhicule automobile selon la revendication 2, dans lequel une partie du moteur hydraulique (21) pouvant tourner coaxialement à la sortie (8e) du différentiel d'essieu (8) est reliée fonctionnellement à une cage (8b) du différentiel d'essieu (8) du deuxième essieu (4) .

4. Véhicule automobile selon la revendication 1, dans lequel la transmission est un différentiel d'essieu (8) et dans lequel le moteur hydraulique (21) n'est pas agencé coaxialement à une sortie (8e) du différentiel d'essieu (8) et un arbre d'entraînement (25) du moteur hydraulique (21) est relié fonctionnellement au différentiel d'essieu (8) du deuxième essieu (4).

5. Véhicule automobile selon la revendication 1 ou 4, dans lequel la transmission est un engrenage différentiel à roues coniques (8), comprenant une couronne (8a), une paire de roues coniques d'essieu (8d) et une paire de roues coniques de compensation (8c), une roue motrice (26) montée sur un arbre d'entraînement (17) du moteur hydraulique (21) étant en prise avec la couronne (8a).

6. Véhicule automobile selon l'une quelconque des revendications précédentes, dans lequel l'entraînement auxiliaire hydrostatique (20) présente une pompe hydraulique (22) entraînée par la chaîne cinématique mécanique (9, 10, 11, 12) par l'intermédiaire de la prise de force du moteur à combustion interne ou de la transmission de véhicule, qui est reliée au moteur hydraulique (21) par l'intermédiaire de conduites de travail hydrauliques (23, 24).

7. Véhicule automobile selon la revendication 4 ou 5, dans lequel le moteur hydraulique (21) peut être accouplé et désaccouplé du différentiel d'essieu (8) du deuxième essieu (4) et/ou des arbres d'entraînement de roue (7a, 7b) du deuxième essieu (4) au moyen d'un accouplement ou d'une roue libre.

8. Véhicule automobile selon la revendication 3, dans lequel un axe d'essieu portant des roues de compensation est logé dans la cage (8b) du différentiel d'essieu (8), ces roues de compensation s'engrenant avec des roues d'arbre d'essieu agencées sur des arbres d'entraînement de roue et ces roues étant configurées sous forme de roues coniques ; et dans lequel le moteur hydraulique (21) est un moteur à pistons radiaux, présentant un anneau de came extérieur fixe et un boîtier de cylindre intérieur circonférentiel, qui est relié de manière immobile en rotation à la cage (8b).

9. Véhicule automobile selon l'une quelconque des revendications précédentes, dans lequel le véhicule automobile est un véhicule utilitaire léger.
